# DEMANDE DE BREVET EUROPEEN

(11) **EP 1 313 264 A1**
(43) Date de publication de la demande: **21.05.2003**
(21) Numéro de dépôt: 02292848.5
(22) Date de dépôt: 15.11.2002
(51) Int. Cl.: H04L 12/28

(54) **Procédé de programmation à distance et de télécommande d'équipements situés dans différentes zones d'un bâtiment**

(30) Priorité: 19.11.2001 FR 0114920
(71) Demandeur: Electricité de France, 75008 Paris (FR)
(72) Inventeur: Bailly, Nöel, 77920 Samois sur Seine (FR)
(74) Mandataire: Simonnet, Christine

(57) **Abrégé**

L'invention concerne un procédé de programmation à distance et de télécommande d'équipements (12) situés dans plusieurs zones (17) d'un bâtiment, qui est supporté par un système composé d'un réseau informatique (10) reliant un serveur (11), hébergeant un site d'un offreur de service, à ce bâtiment par l'intermédiaire d'une passerelle (14), qui est reliée aux équipements par l'intermédiaire d'un réseau de communication interne. Ce procédé comprend les étapes suivantes :
- un client abonné à ce service envoie audit serveur, au moyen d'un terminal connecté au réseau informatique, un ensemble de données,
- le serveur (11) traite ces données et télécharge dans la passerelle (14) les résultats de ces traitements,
- la passerelle envoie aux équipements les consignes ou niveaux de consigne issus directement des traitements ci-dessus ou réalisés en partie localement dans la passerelle,
- la passerelle (14) retourne au serveur les valeurs d'un capteur de référence caractérisant le fonctionnement du système.

## Description

### Domaine technique

L'invention concerne un procédé de programmation à distance et de télécommande d'équipements situés dans différentes zones d'un bâtiment.

### Etat de la technique

L'invention concerne un procédé de télécommande d'équipements, électriques ou non, qui peuvent être un ou plusieurs des équipements suivants : équipements de chauffage, de climatisation, de ventilation, de sonorisation, de visualisation, d'éclairage ... situés dans différentes zones d'un bâtiment.

Pour simplifier la description, on considérera dans la suite, à titre d'exemple, la télécommande d'équipements électriques de chauffage.

La programmation du chauffage dans un bâtiment consiste à réduire la température lorsque les occupants sont absents ou lorsqu'ils souhaitent diminuer la température, par exemple la nuit, et à assurer à un moment voulu la température de confort que ceux-ci désirent. Une telle programmation permet de réaliser des économies d'énergie, voir d'argent, tout en préservant le confort des occupants.

Un document, référencé [1] en fin de description, décrit ainsi une telle programmation du chauffage dans un bâtiment, mais ladite programmation doit être effectuée sur le site.

Une telle programmation est relativement simple à réaliser lorsqu'elle est journalière et s'adresse à l'ensemble d'un bâtiment : elle est alors dite "mono-zone journalière". Sa réalisation devient rapidement complexe lorsqu'elle est hebdomadaire et multi-zones. Mais elle peut laisser plus de liberté à l'occupant qui en tire un meilleur parti financier.

Une telle programmation ne permet pas, le plus souvent, d'optimiser le fonctionnement et donc le coût du chauffage car elle ne tient pas compte des paramètres physiques, tarifaires ou climatiques, qui ne sont pas facilement accessibles à l'occupant.

Une programmation fine présente une complexité à plusieurs niveaux :
- une programmation manuelle jour par jour et pièce par pièce présente un aspect d'autant plus fastidieux que le nombre de pièces est important et que la logique de fonctionnement reste toujours à découvrir. Il n'y a pas, en effet, de standardisation fonctionnelle des équipements utilisés,
- une prise en compte des paramètres physiques n'est généralement pas faite, du moins pour les systèmes simples. Or, l'énergie, dans le domaine du chauffage électrique, présente un prix variable au cours du temps. L'occupant peut ainsi réaliser des économies d'énergie sans réaliser obligatoirement des économies financières : une programmation mal réalisée peut même entraîner une augmentation de la facturation.

Un document de l'art connu, référencé [2], décrit un gestionnaire d'énergie dénommé "Starbox F002" de la société Delta-Dore, ce gestionnaire peut être programmé par le client à l'aide d'une carte à puce. Cette carte à puce a été programmée par l'industriel suite à la réception, par la poste, de grilles remplies par le client donnant ses horaires d'occupation, puis envoyée au client par la poste. Celui-ci doit alors suivre une procédure d'installation pour que le gestionnaire lise la carte et stocke le programme de chauffage. Un tel gestionnaire présente deux inconvénients majeurs :
- il nécessite l'intervention du client,
- sa capacité de programmation est limitée à trois zones par bâtiment.

Un autre document de l'art connu, référencé [3], décrit un gestionnaire autoconfigurable qui effectue seul l'apprentissage des caractéristiques thermiques d'un bâtiment, des besoins de confort de ses occupants et de leurs horaires d'occupation. Ce gestionnaire d'énergie comporte des moyens de commande d'un générateur de conditionnement d'ambiance pour contrôler la quantité d'énergie que doit fournir le générateur pour atteindre une température désirée déterminée. Ces moyens comprennent :
- un dispositif de gestion de l'heure,
- un capteur météorologique,
- des moyens de traitement et de mémorisation pour traiter les informations fournies par les capteurs ainsi que les avis de confort fournis par l'utilisateur,
- une interface système-de-gestion/-utilisateur comportant :
   - plusieurs capteurs, dont un capteur de présence et un capteur de température ambiante, fournissant des informations relatives à la présence d'individus dans l'habitat et à la température ambiante,
   - des moyens d'affichage pour fournir à l'utilisateur des informations sur le prix de l'énergie et la prise en compte des modifications de températures demandées,
   - des moyens d'appréciation permettant à l'utilisateur d'indiquer sa perception du confort obtenu, et
- un moyen d'action sur le générateur de conditionnement d'ambiance.

Ce gestionnaire présente, lui aussi, deux inconvénients majeurs :
- une programmation pièce par pièce est possible mais est coûteuse en matériel,
- une adaptation à des occupants dont la répétitivité des habitudes n'obéit pas à un rythme simple (hebdomadaire par exemple) n'est pas réalisable en l'état actuel de la technique.

Un autre document de l'art connu, référencé [4], décrit un dispositif de contrôle d'un appareil électrique qui comprend un capteur situé sur ledit appareil pour communiquer des informations concernant cet appareil à un microprocesseur. Ce microprocesseur est adapté pour communiquer avec un serveur accessible au travers du réseau Internet. Ce serveur possède une page d'accueil qui est changée sur la base d'opérations reçues et analysées concernant ledit appareil et qui permet de contrôler celui-ci. Ce document décrit également un procédé de contrôle d'un tel appareil électrique au travers du réseau Internet, qui comprend les étapes suivantes :
- contrôle et gestion dudit appareil par un microprocesseur,
- accès audit microprocesseur à travers un réseau de communication à partir d'un serveur accessible sur le réseau Internet,
- fourniture audit serveur d'une page d'accueil avec des informations mises à jour à partir dudit microprocesseur,
- modification de ladite page d'accueil ce qui résulte par la communication par ledit serveur dudit changement audit microprocesseur, qui change alors le statut dudit appareil.

Ce document n'envisage pas la télécommande d'appareils situés dans différentes zones d'un bâtiment.

L'invention a pour objet de pallier les inconvénients des dispositifs de l'art connu, en permettant une programmation à distance et une télécommande personnalisées zone par zone, par exemple pièce par pièce.

### Exposé de l'invention

L'invention concerne un procédé de programmation à distance et de télécommande d'équipements situés dans plusieurs zones d'un bâtiment, qui est supporté par un système composé d'un réseau informatique reliant un serveur, hébergeant un site d'un offreur de service, à ce bâtiment par l'intermédiaire d'une passerelle, qui est reliée aux équipements par l'intermédiaire d'un réseau de communication interne, procédé caractérisé en ce qu'il comprend les étapes suivantes :
- un client abonné à ce service envoie audit serveur, au moyen d'un terminal connecté au réseau informatique, un ensemble de données définissant :
   - la topologie du bâtiment,
   - la nature des équipements,
   - les besoins de confort d'au moins une zone dans les périodes de présence,
   - les horaires de présence/absence dans chacune des zones,
- le serveur traite ces données et télécharge dans la passerelle les résultats de ces traitements,
- la passerelle envoie aux équipements les consignes ou niveaux de consigne issus directement des traitements ci-dessus ou réalisés en partie localement dans la passerelle,
- la passerelle retourne au serveur les valeurs d'un capteur de référence caractérisant le fonctionnement du système.

Dans un premier mode de réalisation, le serveur télécharge dans la passerelle le programme horaire des besoins de confort zone par zone et jour par jour, et des modules logiciels assurant périodiquement le calcul des consignes, ou niveaux de consignes (en fonction de la température extérieure pouvant être mesurée localement, des horaires tarifaires et du type de système de chauffage), pour chaque zone, la gestion et l'envoi de ces consignes aux régulateurs des équipements en utilisant un protocole de communication dans le réseau interne. On utilise les mesures obtenues par une sonde de température au niveau local ou des prévisions de température centralisées au niveau du serveur de l'offreur de service.

Dans un second mode de réalisation, le serveur télécharge dans la passerelle un programme de contrôle des consignes desdits équipements, zone par zone. Les valeurs de température extérieure prises en compte sont des prévisions centralisées au niveau du serveur de l'offreur de service.

Avantageusement le réseau informatique est le réseau Internet, et la passerelle et le serveur intègrent chacun un site Web. Ainsi le client peut se connecter sur le serveur de l'offreur de service ou sur sa passerelle ; il bénéficie de la même interface utilisateur.

Les équipements peuvent être des équipements, électriques ou non, de chauffage, et/ou de climatisation, et/ou de ventilation, et/ou de sonorisation, et/ou de visualisation, et/ou d'éclairage.

Les équipements de chauffage peuvent comprendre un régulateur disposant de plusieurs niveaux de consigne dont les décalages sont fixés et connus.

Un tel service de téléprogrammation d'équipements permet de substituer l'offreur de service au client pour la programmation des équipements. Il permet de réaliser une gestion d'anticipation ainsi qu'un réglage du couple coût/confort. L'offreur de service effectue donc une programmation, par pièce ou par zone, selon les éléments fournis par le client. Le client est ainsi déchargé de la programmation.

Dans un mode de réalisation avantageux, dans une étape préalable, le client se connecte au serveur, via le réseau informatique, qui lui envoie alors un formulaire à remplir.

Avantageusement, le client peut visualiser le programme de besoins de confort actuellement activé et programmer une dérogation par pièce en indiquant le niveau de confort souhaité, et le moment souhaité d'une telle dérogation.

Dans une variante de réalisation, le serveur dispose d'un modèle thermique, dynamique, multi-zones et identifié du bâtiment, ce modèle étant téléchargé dans la passerelle.

Le client peut louer la passerelle, ainsi que les modules de communication avec les équipements.

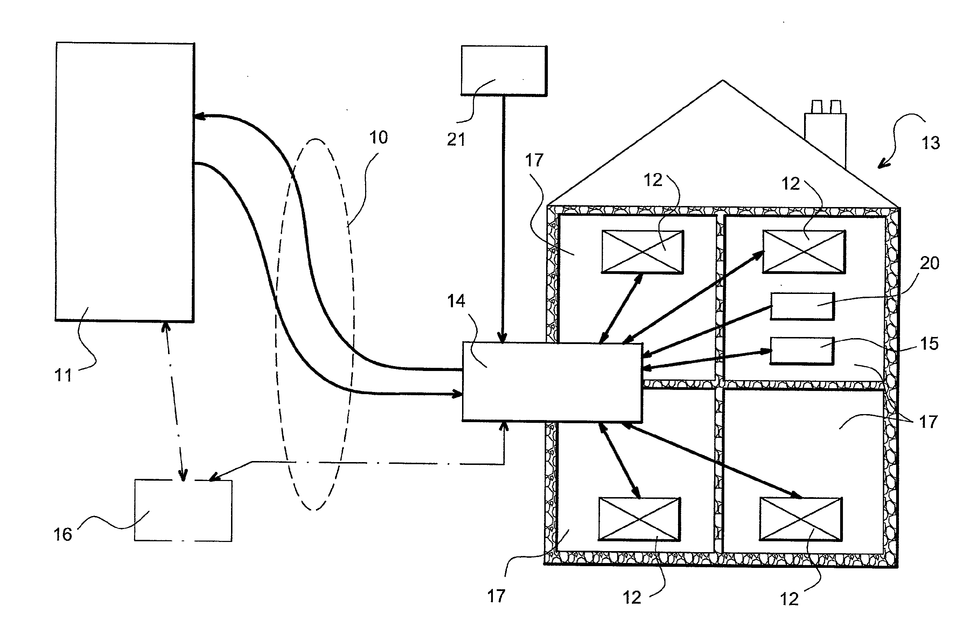

### Brève description de la figure

La figure unique illustre schématiquement un système dans lequel le procédé de l'invention peut être mis en oeuvre.

### Exposé détaillé de modes de réalisation

La figure illustre un schéma d'organisation d'un service de téléprogrammation d'équipements communicants, électriques ou non, et notamment de chauffage, selon l'invention : ces équipements étant situés dans différentes zones d'un bâtiment. Dans la suite nous considérerons, à titre d'exemple que ces zones sont des pièces du bâtiment.

Sur cette figure un réseau informatique 10, par exemple le réseau Internet, relie un serveur 11, hébergeant un site d'un offreur de service de télécommande desdits équipements 12, à un bâtiment 13 via une passerelle, par exemple domotique, 14. Dans cette passerelle 14 résident les modules logiciels assurant le calcul des consignes à chaque pas de temps et pour chaque pièce, la gestion et l'envoi de ces consignes aux régulateurs des équipements installés dans les pièces du bâtiment 13, en utilisant un protocole et le support de communication, qui forme un réseau interne, existant entre la passerelle et les équipements. Ces modules logiciels sont téléchargés depuis le site de l'offreur de service.

Un client audit service, grâce à un terminal de télécommande qui peut être un terminal 15 situé dans ledit bâtiment, un ordinateur personnel ("PC") par exemple, ou un terminal 16 situé à distance, peut se connecter à la passerelle 14 ou au serveur 11.

Plusieurs sondes de température, internes au bâtiment 20 ou externes 21, peuvent être utilisées. Ces sondes sont reliées à la passerelle 14.

La passerelle 14 assure les communications entre l'intérieur et l'extérieur du bâtiment 13. Elle dispose d'une capacité de stockage et d'exécution de modules logiciels, telle que :
- les communications amont, entre le serveur 11 et la passerelle 14, se font via le réseau informatique 10 (réseau RTC (Réseau Téléphonique Commuté) ou ADSL ("Asymetric Digital Subscriber Line") ou CPL (Courant Porteur en Ligne) haut débit ...), les communications aval, entre la passerelle 14 et les équipements 12, se font le plus souvent par des liaisons sans fil (liaison radio ou CPL),
- les modules logiciels présents dans la passerelle comportent notamment :
   - un mini serveur permettant, lors d'une connexion sur la passerelle 14, d'avoir la même ergonomie d'utilisation que lors d'une connexion sur le serveur 11,
   - un logiciel de calcul des niveaux de chauffage en fonction :
      * du temps,
      * de la température extérieure,
      * du système de chauffage,
      * des heures de changement des tarifs de l'électricité.

Dans un exemple de réalisation avantageux on utilise un réseau CPL pour les communications aval, et des protocoles de communication existants ouverts ou non pour les sondes intérieures 20. Les modules logiciels nécessaires à l'activation des équipements sont alors des modules "drivers" pour une communication par courant porteur (CPL) qui emprunte les réseaux électriques existants.

Le procédé de l'invention permet au serveur 11 de se substituer au client pour réaliser une programmation personnalisée pièce par pièce des équipements 12 situés dans le bâtiment.

Un client qui a souscrit le service se connecte ainsi au serveur 11, par exemple à un site Internet "offreur de service", qui lui envoie, en ligne, un formulaire simple demandant des renseignements concernant :
- la topologie du bâtiment,
- la nature des équipements,
- les besoins de confort d'une ou plusieurs pièces dans les périodes de présence,
- les horaires de présence/absence dans chacune des pièces,
- et les horaires de changement de prix de l'électricité.

Le client remplit celui-ci et le retourne via le réseau 10, par exemple le réseau Internet, à l'offreur de service. L'offreur de service traite les données fournies et télécharge les résultats de ce traitement dans la passerelle 14, sans aucune intervention de la part du client.

Dans un premier mode de réalisation, le serveur 11 télécharge dans la passerelle 14 le programme horaire des besoins de confort zone par zone et jour par jour, et des modules logiciels assurant périodiquement le calcul des consignes ou niveaux de consignes des équipements, notamment de chauffage, pour chaque zone, qui se fait en fonction de :
- ledit programme des besoins de confort,
- la valeur de la température extérieure,
- les coûts de l'électricité,
- du type de chauffage.

Ces modules logiciels assurent également la gestion et l'envoi de ces consignes aux régulateurs des équipements en utilisant un protocole de communication dans le réseau interne. Les prévisions météorologiques relatives au bâtiment peuvent alors être centralisées au niveau du serveur ou mesurées localement.

La passerelle doit, en effet, disposer de la valeur de la température extérieure. Deux solutions sont donc possibles :
- elle fait l'acquisition à partir d'une sonde locale,
- elle utilise la valeur du site fournie par l'offreur de service. Pour limiter les connexions de la passerelle au site de l'offreur de service, on peut se contenter des prévisions de température extérieures fournies par un service météo à l'offreur de service et chargées dans la passerelle une fois par jour ; avec une connexion permanente (ADSL par exemple) on peut aller chercher la valeur de température à chaque pas de temps du calcul.

Dans un second mode de réalisation, le serveur 11 télécharge directement un programme de contrôle des consignes ou niveaux de consigne desdits équipements, zone par zone, dans la passerelle. Il se base pour établir ce programme sur le programme des besoins de confort du client et sur les prévisions de température extérieure. Il doit aussi disposer des tarifs de l'énergie du client. Les valeurs de température sont alors issues de prévisions de température et fournies centralement au serveur de l'offreur de service.

La passerelle 14 retourne périodiquement, ou sur événement déclencheur, au serveur 11 les valeurs d'un capteur de référence, par exemple une sonde de température intérieure au bâtiment, caractérisant le fonctionnement du système.

Les sondes 20 et 21 permettent à l'offreur de service de contrôler le résultat de la programmation. En cas de nécessité, il peut éventuellement télécharger de nouveaux résultats de traitement dans la passerelle 14.

Deux flux d'informations principaux sont échangés entre la passerelle 14 et le serveur 11 :
- des informations montantes, issues du bâtiment 13, concernant :
   - la topologie du bâtiment,
   - la nature des équipements de chauffage,
   - les besoins de confort des occupants,
   - les horaires tarifaires du client,
   - l'occupation des pièces,
   - la température intérieure,
   - la température extérieure.
- des informations descendantes, issues du site de l'offreur de service (serveur 11), qui sont notamment :
   - dans le premier mode de réalisation, les modules logiciels à télécharger, dans lesquels :
      - un premier module logiciel calcule, pour chaque pas de temps (typiquement un quart d'heure) et chaque zone, le niveau de la consigne de température à appliquer aux régulateurs des équipements, par exemple des appareils de chauffage, permettant d'atteindre l'objectif fixé (ici le confort du client) à l'instant désiré (c'est la construction du programme de chauffage), en fonction :
         * des demandes de confort du client,
         * de la température extérieure (ou toute autre grandeur influençant le procédé, dans le cas d'une application différente du chauffage des pièces du bâtiment),
         * du tarif de l'énergie électrique,
         * du type de système de chauffage du bâtiment.
      - un second module logiciel sauvegarde les consignes, les écrit dans un format compatible avec le protocole de communication mis en oeuvre entre la passerelle et les régulateurs des équipements et les envoie à ces régulateurs, en utilisant le support de communication, existant entre la passerelle et les équipements,
      - un troisième module logiciel détecte et stocke les horaires de changement de prix de l'énergie,
      - un quatrième module logiciel assure l'acquisition de la valeur de la sonde de température témoin et la stocke au pas de la demi-heure par exemple. Les 48 valeurs journalières sont envoyées au système "back-office" de l'hébergeur, chaque jour.
   - dans le second mode de réalisation, un programme de contrôle des consignes desdits équipements, zone par zone, ce programme remplaçant le logiciel de calcul des consignes vu dans le mode de réalisation précédent,
   - les requêtes de température extérieure,
   - les requêtes de température intérieure.

Il existe aussi un flux d'informations entre le terminal du client 15 ou 16 et la passerelle 14, par lequel passent toutes les informations fournies par le client et les demandes de dérogation en vue de sortir transitoirement de la programmation en cours, en cas d'évènement inhabituel : Le client peut, en effet, programmer une dérogation à l'automatisme, par pièce, en indiquant le niveau de confort souhaité et le moment souhaité d'une telle dérogation.

Dans une variante de réalisation, l'offreur de service peut également disposer d'un modèle thermique dynamique, multi-zones et identifié du bâtiment. Celui-ci peut être téléchargé sur la passerelle 14, permettant de faire une optimisation rigoureuse du couple coût d'exploitation/confort du client.

Le service comprend aussi la configuration des divers équipements.

Dans tous les cas le service peut être complété par la location par l'offreur de l'ensemble du système, c'est-à-dire de la passerelle et des modules de communication avec les équipements.

### Exemple de mise en oeuvre du procédé de l'invention dans le cas de la télécommande d'équipements de chauffage en utilisant le réseau Internet

### Données nécessaires

Dans un exemple de mise en oeuvre, les données suivantes sont à la disposition de l'offreur de service :
- données fournies par le client :
   - l'adresse du bâtiment
   - la topologie du bâtiment (indications des noms ou numéros des pièces)
   - les données horaires de présence/absence dans les pièces,
   - les horaires des plages tarifaires pour adapter l'anticipation à la tarification
   - le type de chauffage pièce par pièce,
- données fournies par la passerelle :
   - les adresses des émetteurs regroupés par zone ou par pièce,
   - les horaires des plages tarifaires pour adapter l'anticipation à la tarification (en option),
   - la température intérieure d'une pièce (en vue de valider les anticipations),
   - les besoins de confort d'au moins une zone dans les périodes de présence,
   - la température extérieure (en option).
- données fournies par l'offreur de service :
   - les données météo pour adapter les anticipations aux prévisions météo,
   - l'heure courante.

L'adresse et la topologie du bâtiment 13 ainsi que les horaires des plages tarifaires sont sauvegardés au niveau du serveur 11. Le client ne saisit donc qu'une seule fois ces informations.

Les horaires des plages tarifaires sont fournis par le client dans le cas général. Cependant, dans le cas où le client a souscrit un service de suivi des coûts de consommations globales d'électricité, cette information peut être enregistrée par l'offreur de service à partir de l'installation du client (bus de télé-information).

Les données à recueillir chez le client sont les demandes de dérogation à la programmation établie (transmises une fois par jour, de la passerelle vers le serveur).

### Description du service pour le client

### 1. Paramètres initiaux

Lorsque le client se connecte sur le site de l'offreur de service, il envoie des informations concernant des paramètres tels que la topologie du bâtiment et le type de chauffage pièce par pièce.

Il caractérise le nombre de pièces équipées d'un système de chauffage. Un tableau I donné en fin de description est alors dimensionné automatiquement. Ce tableau permet de caractériser le type de chauffage installé : par exemple convecteur, panneau rayonnant... Le client sélectionne alors un type de chauffage et clique dans la case correspondante du tableau I.

### 2. Demande de programmation (par pièce)

Le client se connecte sur le site de l'offreur de service. Pour chaque pièce du bâtiment, il indique ses horaires de présence/absence selon trois possibilités, comme représenté sur le tableau II, en :
- présence jour
- présence nuit
- absence

Le client choisit également et associe des niveaux de confort à ces types de présence/absence. Pour cela il sélectionne un niveau et cliquer dans la case correspondante du tableau III de correspondance type de présence/niveau de confort associé :
- Confort (niveau de consigne réglé par le client sur le thermostat de son appareil de chauffage),
- Medio (confort -1°C),
- Moderato (confort -2°C),
- Eco (confort -4°C).

Une fois la programmation réalisée, le client peut visualiser le résultat de sa programmation (pièce par pièce) en cliquant sur un bouton de visualisation.

Le client peut faire une requête de modification de la programmation chaque fois qu'il le juge utile.

### 3. Demande de dérogation (par pièce)

Pour lancer une dérogation le client se connecte sur son terminal (serveur Web embarqué) et va à la page Web qui permet de programmer la dérogation, pièce par pièce, à partir du tableau IV.

Le client clique sur le niveau souhaité puis clique dans la case "Niveau souhaité" de la pièce concernée et indique enfin la date et l'heure de début, et la durée de dérogation souhaitée (en minutes). Une fois cette durée expirée, la programmation reprend le contrôle de la gestion.

Une dérogation en cours ou programmée peut, de la même façon, être annulée de façon simple.

Cette demande de dérogation peut également se faire à l'aide d'une commande à deux touches (touche +/touche -) communiquant avec le terminal du client.

Lorsqu'un trop grand nombre N de demandes de dérogations est enregistré (N supérieur à 10 sur une semaine par exemple), le serveur 11 envoie au client un courrier électronique lui demandant si la programmation actuellement en cours lui donne satisfaction.

### 4. Absence prolongée

En cas d'absence prolongée, le client peut demander, pour l'ensemble des pièces, un niveau de confort moindre sur une période souhaitée. Pour cela, il paramètre une telle absence sur son terminal. Il indique les dates et heures de début et de fin de la période d'absence, dans un tableau V.

Deux niveaux de confort différents sont affectés de façon automatique par le logiciel selon la durée de l'absence (voir le tableau VI) :
- absence courte : absence de durée inférieure ou égale à 48 heures,
- absence longue : absence de durée supérieure à 48 heures.

La programmation reprend le contrôle de la gestion :
- 4 heures avant la fin de la période en cas d'absence courte,
- 24 heures avant en cas d'absence longue.

Une absence prolongée en cours ou programmée peut être annulée de façon simple.

### Description du service pour l'offreur de service

### 1. Installation

L'offreur de service effectue la mise à l'heure de la passerelle 14 et télécharge dans celle-ci :
- un module logiciel de gestion des appareils de chauffage approprié à l'installation du client ("driver" CPL par exemple),
- un module logiciel de lancement et de prise en compte d'une dérogation à la programmation établie.

Il effectue la mise en service (configuration) et le test de l'installation :
- il installe les modules communicants des appareils de chauffage et la sonde de température,
- il établit la table de correspondance entre le nom des pièces et les adresses des appareils de chauffage,
- il installe un programme de chauffage "accéléré" permettant d'effectuer un test de bon fonctionnement,
- il apporte une aide au client pour la première programmation.

L'offreur de service assure également la maintenance et la mise à jour des modules logiciels.

Cette installation peut même être louée au client si les matériels sont conçus dans cet objectif.

### 2. Fonctionnement

L'offreur de service contrôle la validité de l'heure gérée dans la passerelle et effectue, si besoin, des remises à l'heure. Un tableau de programmation par pièce est géré.

L'offreur de service rapatrie ponctuellement la température d'une pièce témoin faite sur des périodes centrées sur les transitions de niveaux de consigne (sur une durée significative, par exemple une heure environ) pour évaluer la pertinence de l'anticipation. Pour cette évaluation, l'offreur de service lance l'acquisition de la température, et le stockage des données se fait dans la passerelle 14.

### • Gestion des transitions de niveaux de consignes dans le cas d'un chauffage par convecteur

L'offreur de service prend en compte l'absence/présence du client et adapte les transitions vers le haut des niveaux de consigne. Deux paramètres sont pris en compte :
- la température extérieure instantanée Te,
- l'heure de changement de période tarifaire.

### a) Prise en compte de la température extérieure

Il s'agit de satisfaire le confort du client. Pour cela, un tableau VII fournissant la durée de l'anticipation en heures est établi. Il serait également possible de s'appuyer sur un modèle thermique identifié du bâtiment. Les valeurs du tableau VII données à titre indicatif s'appliquent en résidentiel avec une inertie moyenne.

Les durées d'anticipation sont évaluées par interpolation linéaire sur la température extérieure.

### b) Gestion des transitions tarifaires

Il s'agit de positionner les heures de changement des besoins de confort du client par rapport aux horaires tarifaires.

Lorsque la transition tarifaire se situe pendant la période d'anticipation issue du tableau VII, pour une transition ascendante ("Eco" vers "Confort" par exemple), l'anticipation débute alors pour que le niveau "Confort" soit atteint au moment de la transition tarifaire.

### • Prise en compte d'un autre système de chauffage

Lorsque le chauffage est assuré par des P.R.E. ("Planchers Rayonnants Electriques"), le tableau VIII est appliqué pour le réglage des consignes. De plus, on ne s'autorise pas à utiliser le niveau "Eco".

Les durées d'anticipation sont évaluées par interpolation linéaire sur la température extérieure.

**Tableau I**

| **Locaux** | **Type de chauffage installé** |
|---|---|
| Salon-séjour | |
| Cuisine | |
| Salle de bains | |
| Chambre 1 | |
| Chambre 2 | |

**Tableau II**

| **Jour** | **0** | **1** | **2** | **3** | **4** | **5** | **6** | **7** | **8** | **9** | **10** | **11** | **---** | **28** | **29** | **30** | **31** |
|---|---|---|---|---|---|---|---|---|---|---|---|---|---|---|---|---|---|
| **Lundi** | | | | | | | | | | | | | | | | | |
| **Mardi** | | | | | | | | | | | | | | | | | |
| **Mercredi** | | | | | | | | | | | | | | | | | |
| **Jeudi** | | | | | | | | | | | | | | | | | |
| **Vendredi** | | | | | | | | | | | | | | | | | |
| **Samedi** | | | | | | | | | | | | | | | | | |
| **Dimanche** | | | | | | | | | | | | | | | | | |

**Tableau III**

| **Type de présence/ absence** | **Niveau de confort associé** |
|---|---|
| Présence Jour | Confort |
| Présence Nuit | Medio |
| Absence | Eco |

**Tableau IV**

| **Nom du local** | **Date et heure de début** | **Durée souhaitée (minutes)** | **Niveau souhaité** |
|---|---|---|---|
| Salon-séjour | 04/02/01 à 22h00 | 90 | medio |
| Cuisine | 04/02/01 à 22h00 | 90 | medio |
| Salle de bains | | | |
| Chambre 1 | | | |
| Chambre 2 | | | |

**Tableau V**

| **Date et heure de début** | **Date et heure de fin** |
|---|---|
| 15/02/01 à 08h00 | 22/02/01 à 18h00 |

**Tableau VI**

| **Type d'absence** | **Niveau de confort associé** |
|---|---|
| Absence courte | Eco |
| Absence longue | Hors gel |

**Tableau VII**

| **Ecart de niveaux de consigne** | **Te= -10°C** | **Te=0°C** | **Te=10°C** | **Te=15°C** |
|---|---|---|---|---|
| **Eco/Confort** | 3 heures | 2 heures | 1,5 heure | 0,75 heure |
| **Eco/Medio** | 2 heures | 1,5 heure | 1 heure | 0,5 heure |
| **Eco/Moderato Moderato/Confort** | 1,5 heure | 1 heure | 0,5 heure | 0,25 heure |
| **Medio/Confort Moderato/Medio** | 1 heure | 0,5 heure | 0,25 heure | 0,15 heure |

**Tableau VIII**

| **Ecart de niveaux de consigne** | **Te= -10°C** | **Te=0°C** | **Te=10°C** | **Te=15°C** |
|---|---|---|---|---|
| **Moderato/Confort** | Inaccessible | 2 heures | 1,5 heure | 1 heure |
| **Medio/Confort** | 2 heures | 1,5 heure | 1 heure | 0,5 heure |

### REFERENCES

[1] Article intitulé "Gestion d'énergie" ("les Cahiers Techniques du Bâtiment", décembre 1990).
[2] Extrait du catalogue 2000/2001 de la société Delta-Dore présentant le gestionnaire Starbox (pages 73 à 75).
[3] FR 0 883 050
[4] WO 00/04427

## Revendications

1. Procédé de programmation à distance et de télécommande d'équipements (12) situés dans plusieurs zones (17) d'un bâtiment, qui est supporté par un système composé d'un réseau informatique (10) reliant un serveur (11), hébergeant un site d'un offreur de service, à ce bâtiment par l'intermédiaire d'une passerelle (14), qui est reliée aux équipements par l'intermédiaire d'un réseau de communication interne, procédé **caractérisé en ce qu'**il comprend les étapes suivantes :
- un client abonné à ce service envoie audit serveur, au moyen d'un terminal connecté au réseau informatique, un ensemble de données définissant :
• la topologie du bâtiment,
• la nature des équipements,
• les besoins de confort d'au moins une zone dans les périodes de présence,
• les horaires de présence/absence dans chacune des zones,
• les horaires de changement de prix de l'électricité,
- le serveur (11) traite ces données et télécharge dans la passerelle (14) les résultats de ce traitement,
- la passerelle (14) envoie aux équipements les consignes ou niveaux de consigne issus directement des traitements ci-dessus ou réalisés en partie localement dans la passerelle,
- la passerelle (14) retourne au serveur les valeurs d'un capteur de référence caractérisant le fonctionnement du système.

2. Procédé selon la revendication 1, dans lequel le serveur (11) télécharge dans la passerelle (14) le programme horaire des besoins de confort zone par zone et jour par jour, et des modules logiciels assurant périodiquement le calcul des consignes, ou niveau de consignes, pour chaque zone, la gestion et l'envoi de ces consignes aux régulateurs des équipements en utilisant un protocole de communication dans le réseau interne.

3. Procédé selon la revendication 2, dans lequel on utilise les mesures obtenues par une sonde de température au niveau local ou des prévisions de température centralisées au niveau du serveur de l'offreur de service.

4. Procédé selon la revendication 1, dans lequel le serveur (11) télécharge dans la passerelle (14) un programme de contrôle des consignes desdits équipements, zone par zone.

5. Procédé selon la revendication 4, dans lequel les prévisions météorologiques relatives au bâtiment sont centralisées au niveau du serveur (11).

6. Procédé selon la revendication 1, dans lequel le réseau informatique (10) est le réseau Internet, et dans lequel la passerelle (14) et le serveur de l'offreur de service comportent chacun un site Web.

7. Procédé selon la revendication 1 dans lequel les zones (17) sont des pièces.

8. Procédé selon la revendication 1, dans lequel les équipements sont des équipements électriques.

9. Procédé selon la revendication 1, dans lequel les équipements (12) sont des équipements de chauffage, et/ou de climatisation, et/ou de ventilation, et/ou de sonorisation, et/ou de visualisation, et/ou d'éclairage.

10. Procédé selon la revendication 1, dans lequel les équipements de chauffage comprennent un régulateur disposant de plusieurs niveaux de consigne dont les décalages sont fixés et connus.

11. Procédé selon la revendication 1, dans lequel, dans une étape préalable, le client se connecte, via le réseau informatique, au serveur qui lui envoie alors un formulaire à remplir.

12. Procédé selon la revendication 1, dans lequel le client programme une dérogation par pièce en indiquant le niveau de confort souhaité, et le moment souhaité d'une telle dérogation.

13. Procédé selon la revendication 1, dans lequel le serveur (11) dispose d'un modèle thermique, dynamique, multi-zones et identifié du bâtiment.

14. Procédé selon la revendication 13, dans lequel ledit modèle est téléchargé dans la passerelle (14).

15. Procédé selon la revendication 1, dans lequel le client loue la passerelle, ainsi que les modules de communication avec les équipements.
